# EUROPEAN PATENT SPECIFICATION

(11) **EP 2 225 952 B1**
(45) Date of publication and mention of the grant of the patent: **19.11.2014**
(21) Application number: 08868516.9
(22) Date of filing: 26.12.2008
(51) Int. Cl.: A23F 3/16, A23F 3/20

(54) **PROCESS FOR PRODUCING PURIFIED TEA EXTRACT**
VERFAHREN ZUR HERSTELLUNG EINES GEREINIGTEN TEEEXTRAKTS
PROCÉDÉ POUR PRODUIRE UN EXTRAIT DE THÉ PURIFIÉ

(30) Priority: 27.12.2007 JP 2007336989
(43) Date of publication of application: 08.09.2010
(73) Proprietor: Kao Corporation, Chuo-Ku Tokyo 103-8210 (JP)
(72) Inventor: SHIKATA, Kenichi, Kamisu-shi Ibaraki 314-0103 (JP); SATO, Hitoshi, Kamisu-shi Ibaraki 314-0103 (JP); SHIBATA, Keiji, Kamisu-shi Ibaraki 314-0103 (JP)
(74) Representative: Hoffmann Eitle
(86) International application number: PCT/JP2008/003990
(87) International publication number: WO 2009/084215

(56) References cited:
- EP-A1- 2 008 525
- GB-A- 1 249 932
- JP-A- 2007 089 561
- JP-A- 2007 135 579
- JP-A- 2007 274 920
- US-A1- 2006 263 454

## Description

### Field of the Invention

This invention relates to a process for producing a purified tea extract.

### Background of the Invention

As a method for improving the taste and flavor of a green tea extract solution, it is known to subject the green tea extract solution to tannase treatment (Patent Document 1) . With a view to producing a purified green tea extract of high quality, there has also been proposed a method that passes an aqueous solution of green tea extract, which is obtainable by subjecting the green tea extract to tannase treatment, through a specific polymer membrane having a membrane pore size of from 0.05 to 0.8 µm (Patent Document 2). Further, with a view to producing a tea extract with an excellent taste, flavor and external appearance, there has also been proposed a method that subjects a tea extract solution to tannase treatment after cooling the tea extract solution to 15°C or lower, preferably 10°C or lower to eliminate insoluble solids (Patent Document 3).

For the purpose of improving the velocity of a tannase-catalyzed reaction, on the other hand, there is known a method that allows a tea extract to pass through a filter membrane with tannase immobilized thereon (Patent Document 4).
[Patent Document 1] JP-A-2004-321105
[Patent Document 2] JP-A-2007-061083
[Patent Document 3] JP-A-2007-295891
[Patent Document 4] JP-A-02-128650

JP 2007-089561 describes a method for producing a refined green tea extract which contains 25-90 mass% of nonpolymerized catechin. The method comprises melting in water or an organic solvent aqueous solution a green tea extract which is subjected to contact treatment with activated carbon and acid white clay or activated white clay in a mixed solution of a mass ratio of an organic solvent to water of (91:9)-(97:3), adding 1-30 pts.mass water soluble inorganic salts to 100 pts.mass of the solid of the green tea extract, and removing a produced insoluble matter.

JP 2007-135579 is directed to a method for producing the refined green tea extract, which comprises dispersing a green tea extract in a mixed solution with a mass ratio of an organic solvent to water of (91:9)-(97:3), bringing the product into contact with activated carbon and/or acid white clay or activated white clay to obtain a solution, adding water to and/or removing the organic solvent from the solution to bring a mass ratio of the organic solvent to water in the solution to (70:30)-(40:60), and centrifuging and/or adding a body feed agent to the solution followed by pre-coat filtering.

JP 2007-274920 relates to a method for producing green-tea extract, comprising: making green-tea extract come in contact with synthetic adsorbent to make the synthetic adsorbent adsorb nonpolymer catechins falling in the green-tea extract; making the synthetic adsorbent come in contact with basic water solution after finishing the adsorption process to make the synthetic adsorbent elute the nonpolymer catechins; regulating the elution liquid to have pH 7 or less to be concentrated; and subjecting precipitated suspended substance to solid-liquid separation/elimination, so that the solid content in the extracted substance contains 25-90 mass% of the nonpolymer catechins.

EP 2008525 describes a process for producing a purified green tea extract, the process including mixing a green tea extract treated with an enzyme having a tannase activity in a mixed solution containing an organic solvent and water at a mass ratio from 60/40 to 90/10 and separating a precipitate thus formed. The process is for producing a purified green tea extract, from a green tea extract, containing non-polymer catechins in a high concentration of, which can improve the taste by reducing bitterness/astringency and miscellaneous tastes caused by dietary fiber derived from green tea, provide a reduced protein content, and make it easy to drink.

US 2006/263454 concerns a process for producing a purified product of green tea extract, which includes subjecting an aqueous solution of green tea extract to solid-liquid separation by filtration and/or centrifugal separation to obtain another aqueous solution of green tea extract, said another aqueous solution having a turbidity of from 0.2 to 2.0 as measured with a concentration of non-polymer catechins in it adjusted to 1 wt %, and then allowing the another aqueous solution of green tea extract to pass through a polymer membrane having a membrane pore size of from 0.05 to 0.8 mum such that the turbidity of the another aqueous solution of green tea extract is reduced to lower than 0.2 as measured with a concentration of non-polymer catechins in it adjusted to 1 wt %.

GB 1249932 describes a method wherein tea creams, are solubilised by treating an aqueous suspension of the tea cream with an enzyme preparation, preferably tannase which may have been derived from Aspergillus oryzae, niger or flavus, capable of converting at least a portion of the cream to a cold-water soluble form. A water soluble tea concentrate, produced by preparing an aqueous solution of a tea extract containing a suspension of the cream, and stabilising as above, may be dried to give a powder.

### Summary of the Invention

The present invention provides a process for producing a purified tea extract, which includes:
a first step which comprises eliminating water-insoluble solids from a first tea extract and then obtaining a second tea extract so that a turbidity falls into a range from 0.1 to 100 NTU when a concentration of the non-polymer catechins is adjusted to 0.7 wt%, and
a second step which comprises subj ecting the second tea extract at a concentration of the non-polymer catechins of from 0.05 to 4.0 wt% to tannase treatment,
wherein the average reaction time of the tannase treatment is 20 to 90 min.

The present invention also provides a purified tea extract obtained by the above-described production process.

### Detailed Description of the Invention

The above-described conventional methods involve problems as will be described next. Described specifically, the method described in Patent Document 1 provides a green tea extract, which is controlled in the ratio of gallate forms and is good in taste and flavor. However, tannase is used in a large amount for a green tea extract solution, and moreover, the treatment time is long. Therefore, the method is not only inefficient but also difficult to adjust a green tea extract into a desired composition. The method described in Patent Document 2 can efficiently provide a purified green tea extract of excellent color and stability, but similar to the above-described method, there is a room for improvement in the amount of tannase to be used and the treatment time. With the method described in Patent Document 3, the yield of the non-polymer catechins is considerably lowered due to a phenomenon called "creaming down" that upon cooling, the non-polymer catechins form complexes with caffeine and the like and are hence insolubilized to develop a precipitate or turbidity. Further, the method described in Patent Document 4 is hardly considered to be an efficient method, because it involves a problem that the immobilization rate of tannase on a filter membrane is low and the enzyme is required in a large amount, and moreover, the filter membrane needs washing, sterilization and the like after a tea extract is allowed to pass through the filter membrane.

With the above-described problems in view, the present inventors have conducted research. As a result, it has been found that by controlling within particular ranges the turbidity and the concentration of the non-polymer catechins of a tea extract to be subjected to tannase treatment, an enzyme reaction can be dramatically accelerated with addition of tannase in a smaller amount, and a purified tea extract with suppressed bitterness and astringency can hence be produced efficiently and economically.

According to the present invention, the tannase treatment of a tea extract after the elimination of water-insoluble solids to give a predetermined turbidity and the subsequent adjustment of the non-polymer catechins to a predetermined concentration can dramatically accelerate the enzyme reaction with a smaller amount of the enzyme. A purified tea extract with suppressed bitterness and astringency can hence be produced efficiently and economically. The production process according to the present invention is, therefore, effective for the production of a purified tea extract on an industrial scale because the labor (time and the like) and costs required for the production can be substantially reduced.

The term "non-polymer catechins" as used herein is a generic term, which collectively encompasses non-epi-formcatechins such as catechin, gallocatechin, catechin gallate and gallocatechin gallate, and epi-form catechins such as epicatechin, epigallocatechin, epicatechin gallate and epigallocatechin gallate. The concentration of the non-polymer catechins is defined based on the total amount of the above-described eight non-polymer catechins.

The term "gallate forms of the non-polymer catechins" as used herein is a generic term, which collectively encompasses the four gallates of catechin gallate, gallocatechin gallate, epicatechin gallate and epigallocatechin gallate, and the term "ratio of gallate forms in the non-polymer catechins" indicates the percentage value of a total weight of the four non-polymer catechin gallates based on a total weight of the above-described eight non-polymer catechins.

The process of the present invention for the production of a purified tea extract includes the first step and second step. A detailed description will hereinafter be made about each of these steps.

### (First step)

The first step in the present invention is a step to eliminate water-insoluble solids from a first tea extract such that, when the concentration of the non-polymer catechins is adjusted to 0.7 wt%, the turbidity falls from 0.1 to 100 NTU, whereby a second tea extract is obtained.

As the first tea extract, an extract obtained from tea leaves can be mentioned, for example, and this extract has been subjected to neither concentration nor purification operation. Namely, the first tea extract has a concept that includes tea extract solution, and contains at least one non-polymer catechin.

As the tea leaves for use in extraction, an unfermented tea, semi-fermented tea or fermented tea can be mentioned depending upon the degree of fermentation. Unfermented teas include green teas such as *sencha, bancha, gyokuro, tencha* and *kamairicha* manufactured from tea leaves obtained from the Genus Camellia, for example, *C. sinensis, C. assamica,* the Yabukita variety, or a hybrid thereof. Semi-fermented teas and fermented teas include black tea, oolong tea, pu-erh tea and the like manufactured from tea, which is obtained from tea of the Genus Camellia, for example, *C. sinensis, C. assamica,* the Yabukita variety, or a hybrid thereof, via a semi-fermentation or fermentation step. Of these, preferred are unfermented teas containing the non-polymer catechins in high proportion. As the first tea extract, a green tea extract is preferred.

The concentration of the non-polymer catechins in the first tea extract may be preferably from 0.5 to 4.0 wt%, more preferably from 0.5 to 2.0 wt%.

Using water as an extraction solvent, the extraction from tea leaves can be conducted by a known method such as kneader extraction, agitation extraction (batchwise extraction), countercurrent extraction (drip extraction) or column extraction. An organic acid such as ascorbic acid or its sodium salt, or its salt may be added beforehand in water upon extraction. It is also possible to make combined use of a method that conducts extraction while eliminating dissolved oxygen by boiling deaeration or bubbling of an inert gas such as nitrogen gas, that is, under a so-called non-oxidizing atmosphere.

In the present step, instead of employing as the first tea extract an extract obtained from tea leaves, it is also possible to employ one obtained by diluting or dissolving a concentrated or dried tea extract in water or to employ an extract from tea leaves in combination with a dilution or solution of a concentrated or dried tea extract. The term "a concentrated or dried tea extract" means a concentrate or dried product of an extract obtained from tea leaves with hot water or a water-soluble organic solvent, and it can be prepared, for example, by the process disclosed in JP-A-59-219384, JP-A-04-020589, JP-A-05-260907, JP-A-05-306279 or the like. As the concentrated or dried tea extract, a commercially-available product may also be used. Examples include "POLYPHENONE" (product of Mitsui Norin Co., Ltd.), "TEAFURAN" (product of ITO EN, LTD.), "SUNPHENON" (product of Taiyo Kagaku Co. , Ltd.), and the like. As the form of the concentrated tea extract, a liquid, slurry, semi-solid or solid can be mentioned, for example.

In this step, water-insoluble solids are eliminated from the first extract such that, when the concentration of the non-polymer catechins is adjusted to 0.7 wt%, the turbidity falls from 0.1 to 100 NTU. As an elimination method of the water-insoluble solids, it is possible to adopt at least one solid-liquid separation method selected from membrane processing, filtration and centrifugal separation. Of these, membrane processing, especially microfiltration (MF) is preferred in that it facilitates to more surely eliminate water-insoluble solids and to adjust the turbidity to a desired turbidity. In this step, the elimination may be conducted more preferably by combining two or more of these solid-liquid separation methods. It is possible to mention, for example, a method that conducts solid-liquid separation of a tea extract into solid components and water-soluble components by filtration and/or centrifugal separation processing and then subjects the water-soluble components to membrane processing. Compared with before, this step makes it possible to accelerate the enzyme reaction with a smaller amount of the enzyme and to lower the ratio of gallate forms in a shorter time. The term "water-insoluble solids" means solids that are derived from a tea extract and are insoluble in water. For example, water-insoluble solids such as polysaccharides, proteins, complexes thereof, and the like can be mentioned.

When a tea extract is cooled, polyphenols in the tea extract form water-insoluble complexes, for example, with caffeine so that creaming down occurs. When cooled to a temperature of 15°C or lower, especially 10°C or lower, the precipitated amount of complexes pronouncedly increases, leading to a considerable decrease in the yield of the non-polymer catechins. In order to avoid a decrease in the yield of the non-polymer catechins due to occurrence of creaming down, it is thus preferred in this step to eliminate water-insoluble solids at a temperature at which no creaming down occurs during the elimination operation of water-insoluble solids. It is to be noted that the expression "temperature at which no creaming down occurs" means a temperature at which the yield of the non-polymer catechins after elimination of water-insoluble solids reaches 90% or higher.

Specifically, the temperature upon elimination of water-insoluble solids may be preferably 15°C or higher, more preferably 16°C or higher, far more preferably 20°C or higher, still far more preferably 25°C or higher. It is to be noted that an upper limit to such a temperature may be 50°C, with 40°C being more preferred, from the viewpoint of retention of the taste and flavor of the tea extract.

Upon eliminating water-insoluble solids by membrane processing, the pressure may, for example, be preferably from 30 to 400 kPa, more preferably from 50 to 400 kPa, still more preferably from 50 to 350 kPa. The membrane pore size may be preferably from 0.01 to 1 µm, more preferably from 0.05 to 0.45 µm, far more preferably from 0.1 to 0.25 µm in that the turbidity can be easily and conveniently adjusted. As a measuring method of the membrane pore size, a general measuring method making use of mercury intrusion porosimetry, the bubble point test, bacterial filtration porosimetry or the like can be mentioned. It is, however, preferred to use a value determined by the bubble point test.

Membranes usable in the present invention include, for example, hydrocarbon, fluorinated hydrocarbon or sulfone polymer membranes and ceramic membranes. Examples of the hydrocarbon polymer membranes include polyolefin polymer membranes such as polyethylene membranes and polypropylene membranes. Examples of the fluorinated hydrocarbon polymer membranes include fluorinated polyolefin membranes such as polytetrafluoroethylene (PTFE) membranes and polyvinylidene difluoride (PVDF) membranes. Examples of the sulfone polymer membranes include polysulfone (PS) membranes, polyether sulfone (PES) membranes and the like. Examples of the ceramic membranes include α-A1₂O₃ membranes. Of these, polyolefin polymer membranes, fluorinated polyolefin polymer membranes and ceramic membranes are preferred from the standpoints of washability and membrane load. From the viewpoints of membrane washing and sterilization at high temperatures, ceramic membranes are preferred, and from the viewpoints of filtration property, polyolefin polymer membranes and fluorinated polyolefin polymer membranes are preferred. As kinds of membranes, flat membranes, spiral membranes, hollow fiber membranes and the like can be mentioned. Among them, continuous processing membranes such as spiral membranes and hollow fiber membranes are preferred in that still more efficient processing can be performed.

For centrifugal separation, conventional equipment such as a separation-plate-type centrifugator, cylinder-type centrifugator or decanter-type centrifugator can be used. Conditions for centrifugal separation can be determined as desired such that the desired turbidity can be achieved. In the case of a separation-plate-type centrifugator, for example, the rotational speed and time may be preferably from 3,000 to 10,000 rpm, more preferably from 5,000 to 10,000 rpm, even more preferably from 6,000 to 10,000 rpm, and preferably from 0.2 to 30 min, more preferably from 0.2 to 20 min, even more preferably from 0.2 to 15 min.

Filtration is generally conducted in combination with another solid-liquid separation method for the purpose of coarse filtration. For example, a filter paper, a filter made of a metal such as stainless steel, or the like can be used. The mesh size of such a metal-made filter may be preferably from 18 to 300 mesh.

The turbidity of the second tea extract obtained as described above is from 0.1 to 100 NTU at a concentration of the non-polymer catechins of 0.7 wt%. From the viewpoints of suppression of bitterness and astringency and an improvement in the velocity of the tannase-catalyzed reaction, however, the turbidity may be preferably from 0.1 to 50 NTU, more preferably from 0.1 to 35 NTU, more preferably from 0.1 to 30 NTU, even more preferably from 0.1 to 20 NTU. When the turbidity is in such a range, the velocity of the tannase-catalyzed reaction can be dramatically improved, and moreover, the tea extract is excellent in stability and can be sufficiently suppressed in bitterness and astringency. It is to be noted that the term "turbidity" as used herein means a value determined by conducting a measurement at a wavelength range of 850 nm by the 90° transmitted/scattered light comparison method after diluting the second tea extract with deionized water to give a concentration of the non-polymer catechins of 0.7 wt%.

### (Second step)

The second step in the present invention is a step to subject the second tea extract at a concentration of the non-polymer catechins of from 0.05 to 4.0 wt% to tannase treatment. Through the second step, a purified tea extract is obtained with pronouncedly-reduced bitterness and astringency.

Unless the concentration of the non-polymer catechins in the second tea extract is in the range of from 0.05 to 4.0 wt%, the concentration of the non-polymer catechins can be adjusted to the above-described range by either adding water to the second tea extract to dilute it or concentrating the second tea extract before conducting the tannase treatment.

Upon conducting the tannase treatment, the second tea extract has the concentration of the non-polymer catechins of from 0.05 to 4.0 wt%. From the standpoint of improvements in the efficiency of the treatment, the concentration of the non-polymer catechins may be preferably from 0.1 to 1.0 wt%, more preferably from 0.1 to 0.9 wt%, far more preferably from 0.2 to 0.8 wt%, still far more preferably from 0.25 to 0.75 wt%. A concentration of the non-polymer catechins higher than 4.0 wt% is not preferred, because the reaction velocity is lowered and the enzyme is required in a greater amount. A concentration of the non-polymer catechins lower than 0.05 wt%, on the other hand, is not preferred either, because upon inactivation of the enzyme, a greater heat quantity is loaded as a result of an increase in the amount of the solution.

It is to be noted that "the concentration of gallate forms of the non-polymer catechins" can be expressed by the product of "the concentration of the non-polymer catechins" and "the ratio of gallate forms in the non-polymer catechins". When the ratio of gallate forms is 50 wt%, for example, "the concentrations of gallate forms of the non-polymer catechins" in tea extract at the non-polymer catechin concentrations of which are from 0.05 to 4.0 wt%, from 0.1 to 1.0 wt%, from 0.2 to 0.8 wt% and from 0.25 to 0.75 wt% correspond to from 0.03 to 2.0 wt%, from 0.05 to 0.5 wt%, from 0.1 to 0.4 wt% and from 0.13 to 0.38 wt%, respectively.

The tannase for use in this step can be any tannase insofar as it has activity to hydrolyze non-polymer catechins. Specifically, tannase obtainable by culturing a tannase-producing fungus of the Aspergillus, Penicillium or Rhizopus genus can be used. Of these, preferred is one available from Aspergillus oryzae. Tannase can be in a powder form or in the form of a solution.

The amount of tannase to be added may be preferably from 0.02 to 0.75 Unit per gram of a tea extract in which the concentration of the non-polymer catechins is 0.67 wt%. From the standpoints of a reduction in the amount to be added and controllability of the enzyme reaction, from 0.04 to 0.45 Unit is more preferred, with from 0.06 to 0.30 Unit being even more preferred. It is to be noted that "1 Unit" is defined to be an amount of enzyme that hydrolyzes 1 micromole of ester bonds, which are contained in tannic acid, in water of 30°C.

It is desired to hold the reaction temperature preferably at from 5 to 45°C, more preferably at from 15 to 40°C after the addition of tannase until the ratio of gallate forms in the non-polymer catechins reaches preferably from 0.1 to 50 wt%, more preferably from 1 to 40 wt%, even more preferably from 10 to 30 wt%.

Concerning the control of the ratio of gallate forms by the tannase treatment, it is preferred to determine the end point of the reaction depending upon the pH behavior of the tea extract during the treatment. The pH may be preferably from 3 to 6, more preferably from 3.5 to 5.5. In this manner, it is possible to easily and conveniently prepare a purified tea extract having a desired ratio of gallate forms.

As an average reaction time in the tannase treatment, there is an upper limit of the reaction time from the viewpoint of retention of the taste and flavor. From the viewpoint of control of the ratio of gallate forms, on the other hand, there also is a lower limit of the reaction time. The average reaction time in the tannase treatment is from 20 to 90 min.

Subsequently,the temperature is raised as promptly as possible to from 45 to 95°C, preferably from 75 to 95°C so that the tannase is inactivated to terminate the reaction. The treatment time for the inactivation of the tannase may be set desirably for 2 min or longer at 90°C or higher or for 5 min or longer at 80°C or higher. As an inactivation method for the enzyme reaction, it is possible to mention a batchwise heating method or a continuous-holding heating method making use of a plate-type heat exchanger or a holding tube. The inactivation treatment for the tannase can prevent a subsequent decrease in the range of gallate forms, and therefore, can facilitate to obtain a tea extract having an intended range of gallate forms

The purified tea extract of the present invention obtained as described above can be added as it is to beverages and the like. Like a concentrate with water distilledofforadried so lid product, powder or granules, the purified tea extract may be converted into a high-concentrate form.

As a high-concentration method by concentration or drying, reduced-pressure concentration, reverse osmosis membrane concentration, spray drying, freeze drying or spray drying can be mentioned, for example. Compared with before, the purified tea extract is reduced in the heat loaded by reduced-pressure concentration or spray drying or in the clogging of a membrane by the reverse osmosis membrane concentration method. It is, therefore, possible to efficiently obtain a purified tea extract which contains the non-polymer catechins at high concentration and is excellent in stability when added to a beverage. As an efficient high-concentration method, it is possible to preferably adopt, for example, a method that first conducts primary concentration to a solids concentration of from 5 to 60 wt% by reduced-pressure concentration or reverse osmosis membrane concentration, and depending on the application, then forms the concentrate into a powder by spray drying or freeze drying.

Through the above-described steps, impurities such as high molecules or lipids can be eliminated from the purified tea extract according to the present invention, and therefore, its temporal stability can be improved, Further, the purified tea extract can be dispersed in a mixed solution of an organic solvent and water and can then be subjected to contact treatment with activated carbon and acid clay or activated clay. This treatment makes it possible to obtain a purified tea extract, which is still better in temporal stability and has high quality and low caffeine content while the non-polymer catechins are contained at high concentration.

From the standpoints of the extraction efficiency of the non-polymer catechins, the purification of the tea extract, long-term drinkability, the recovery efficiency of the organic solvent and the like, the content weight ratio of the organic solvent to water may be set preferably at from 60/40 to 97/3, more preferably at from 60/40 to 95/5, far more preferably at from 85/15 to 95/5.

The organic solvent can be an alcohol such as ethanol or methanol, a ketone such as acetone, or an ester such as ethyl acetate. Among these, hydrophilic organic solvents such as alcohols and ketones are preferred. In view of use in foods, alcohols are more preferred, with ethanol being still more preferred. The water can be ion-exchanged water, tap water, natural water or the like.

The amount (in terms of dry weight) of the purified tea extract to be used may be preferably from 10 to 40 weight parts, more preferably from 10 to 30 weight parts, far more preferably from 15 to 30 weight parts per 100 weight parts of the mixed solution of the organic solvent and water in that the purified tea extract can be efficiently treated.

It is more preferred to set an aging time of from 10 to 180 min or so after the addition into the mixed solution of the organic solvent and water. Such treatment can be conducted preferably at from 10 to 60°C, more preferably at from 10 to 50°C, even more preferably at from 10 to 40°C.

The activated carbon may be added preferably in an amount of from 0.5 to 8 weight parts, more preferably from 0.5 to 3 weight parts per 100 weight parts of the mixed solution of the organic solvent and water because of the elimination efficiency of caffeine and smaller cake resistance in the filtration step. Further, the adding ratio (weight ratio) of the activated carbon to the acid clay or activated clay (the activated carbon: the acid clay or activated clay) may be preferably from 1:1 to 1:10, more preferably from 1:1 to 1:6.

In the purified tea extract produced as described above, the content weight ratio [(A)/(B)] of the non-polymer catechins (A) to caffeine (B) can be set preferably at from 4 to 200, more preferably at from 5 to 200, far more preferably at from 15 to 200, still far more preferably at from 30 to 200.

In the purified tea extract according to the present invention, the non-polymer catechins may be contained preferably at from 5 to 90 wt%, more preferably at from 10 to 90 wt%. The purified tea extract according to the present invention may contain preferably from 25 to 90 wt%, more preferably from 30 to 90 wt% of the non-polymer catechins in its solids content.

The purified tea extract according to the present invention, despite substantially reduced bitterness and astringency, still retains the non-polymer catechins at a high concentration and is also good in color. Therefore, the purified tea extract according to the present invention is useful for application in packaged beverages, and is useful as tea-based beverages such as green tea, oolong tea, blended teas, black tea and barley teas, and also, as non-tea-based beverages such as sports drinks, isotonic beverages and near waters.

In packaged beverages, the non-polymer catechins maybe contained, ina formdissolvedinwater, preferably at from 0.03 to 1.0 wt%, more preferably at from 0.04 to 0 - 5 wt%, far more preferably at from 0.06 to 0.4 wt%, still far more preferably at from 0.08 to 0.3 wt%, yet still far more preferably at from 0.1 to 0.3 wt%. When the content of the non-polymer catechins is in this range, the non-polymer catechins can be readily ingested in a large amount, and further, this content is also preferred from the standpoint of the color tone shortly after the preparation of a beverage. The concentration of the non-polymer catechins can be adjusted depending on the amount of the tannase-treated purified tea extract to be added.

In the packaged beverage according to the present invention, the ratio of gallate forms in the non-polymer catechins may be preferably from 0 to 63 wt%, more preferably from 5 to 56 wt%, far more preferably from 5 to 48 wt%.

The pH (25°C) of the packaged beverage may be controlled desirably to from 2 to 7, more desirably to from 2 to 6.5, even more desirably to from 3 to 4 . 5 from the standpoints of the stability of the non-polymer catechins.

The addition of a bitterness/astringency suppressor to the packaged beverage facilitates its drinking, and therefore, is preferred. As the bitterness/astringency suppressor, a cyclodextrin is preferred although not particularly limited thereto. As the cyclodextrin, an α-, β- or γ-cyclodextrin or a branched cyclodextrin can be used. To the packaged beverage, additives such as antioxidants, flavorings, various esters, organic acids, organic acid salts, inorganic acids, inorganic acid salts, inorganic salts, colors, emulsifiers, preservatives, seasoning agents, sour seasonings, gums, emulsifiers, oils, vitamins, amino acids, fruit extracts, vegetable extracts, flower honey extracts, pH regulators and quality stabilizers can be added either singly or in combination.

As a package useful for the packaged beverage, a package of a conventional form, such as a molded package made of polyethylene terephthalate as a principal component (a so-called PET bottle), a metal can, a paper package combined with metal foils or plastic films, a bottle or the like, can be mentioned as in general beverages.

The packaged beverage can be produced, for example, by filling the beverage in a package such as a metal can and, when heat sterilization is feasible, conducting heat sterilization under sterilization conditions prescribed in relevant regulations (in Japan, the Food Sanitation Act). For those which cannot be subjected to retort sterilization like PET bottles or paper packages, a process is adopted such that the beverage is sterilized beforehand at a high temperature for a short time under similar sterilization conditions as those described above, for example, by a plate-type heat exchanger or the like, is cooled to a particular temperature, and is then filled in a package. Under aseptic conditions, additional ingredients may be added to and filled in a beverage-filled package. It is also possible to conduct an operation such that subsequent to heat sterilization under acidic conditions, the pH of the beverage is allowed to get back to neutral under aseptic conditions or that subsequent to heat sterilization under neutral conditions, the pH of the beverage is allowed to drop back to the acidic side under aseptic conditions.

### Examples

### Measurements of the non-polymer catechins

A tea extract was diluted with distilled water, and was then subjected to filtration through a filter (0.8 µm) to prepare a sample. A high-perf ormance liquid chromatograph (model: "SCL-10AVP", manufactured by Shimadzu Corporation) was fitted with a liquid chromatograph column packed with octadecyl group-introduced silica gel ("L-COLUMN, TM ODS", 4.6 mm in diameter x 250 mm; product of Chemicals Evaluation and Research Institute, Japan). The sample was measured at a column temperature of 35°C by the gradient elution method while using Solution A and Solution B. Solution A, a mobile phase, was a solution containing acetic acid at 0.1mol/L in distilled water, while Solution B, another mobile phase, was a solution containing acetic acid at 0.1 mol/L in acetonitrile. The measurement was conducted under the conditions of 20 µL sample injection volume and 280 nm UV detector wavelength.

### Measurement of turbidity

Each tea extract was diluted with deionized water to lower the concentration of the non-polymer catechins to 0.7 wt%. Using the thus-prepared dilute as a sample, measurement was conducted by the following analytical instrument under the following conditions.

### (Analytical instrument)

Turbidimeter: "TURBIDIMETER/TN-100" manufactured by Eutech Instruments Pte Ltd.
Wavelength range: 850 nm
Method: 90° transmitted/scattered light comparison method

### Evaluation of taste and flavor

Each purified tea extract was diluted with deionized water to lower the concentration of the non-polymer catechins to 0.175 wt%. Through deliberation by a panel of five assessors, its taste and flavor (bitterness and astringency) were assessed in accordance with the below-described standards.

### (Evaluation standards for taste and flavor)

A: Bitterness and astringency are weak.
B: Bitterness and astringency are slightly felt.
C: Bitterness and astringency are strong.

### Overall evaluation

In view of the evaluation of taste and flavor and the yield of the non-polymer catechins at the time of solid-liquid separation, an overall evaluation was performed in accordance with the below-described standards through deliberation.

### (Standards for overall evaluation)

A: Production conditions for purified tea extract are best.
B: Production conditions for purified tea extract are better.
C: Production conditions for purified tea extract are good.
D: Production conditions for purified tea extract are slightly inferior.
E: Production conditions for purified tea extract are inferior.

### Example 1

Dried tea leaves (75 g) were extracted for 30 min with deionized water (0.75 L) of 90°C, and the extract was subjected to coarse filtration through 80-mesh stainless steel filter and 200-mesh stainless steel filter to obtain a tea extract (1) .Then, the tea leaves recovered by the coarse filtration were extracted again for 30 min with deionized water (0.75 L) of 90°C, and the extract was subjected to coarse filtration through 80-mesh stainless steel filter and 200-mesh stainless steel filter to obtain a tea extract (2). The tea extract (1) and the tea extract (2) were combined together to obtain a first tea extract. The first tea extract was then allowed to pass at a temperature of 40°C and a pressure of 100 kPa through a ceramic filter having a membrane pore size of 0.2 µm to obtain a second tea extract with a turbidity lowered to 3.10 NTU. Subsequently, water was added to the second tea extract such that the concentration of the non-polymer catechins was lowered to 0.67 wt% (pH 5.4). Tannase ("TANNASE KTFH", product of Kikkoman Corporation) was then added as much as 0.25 Unit per gram of the water-added second tea extract, followed by tannase treatment at 40°C for 30 min. When the ratio of gallate forms decreased to 25 wt% (pH 4.8), heating was conducted at 90°C for 2 min to inactivate the enzyme so that the reaction was terminated. The reaction mixture was allowed to cool. Using a reverse osmosis membrane, the reaction solution was then subjected to concentration processing to a solids concentration of 17 wt%. Spray drying was conducted to obtain a powdery, purified tea extract. The production conditions for the purified tea extract and the results of its evaluations are shown in Table 1.

### Example 2

A powdery, purified tea extract was obtained by a similar procedure as in Example 1 except that the first extract obtained in Example 1 was allowed to pass through a 0.1-µm polyolefin membrane ("PSP-003", Asahi Kasei Chemicals Corporation). The production conditions for the purified tea extract and the results of its evaluations are shown in Table 1.

### Comparative Example 1

A powdery, purified tea extract was obtained by a similar procedure as in Example 1 except that the first extract obtained in Example 1 was treated with 0.25 Unit of tannase added thereto for 60 min without membrane processing to adjust the ratio of gallate forms to 25 wt%. The production conditions for the purified tea extract and the results of its evaluations are shown in Table 2.

### Comparative Example 2

To the first tea extract obtained in Example 1, water was added such that the concentration of the non-polymer catechins was lowered to 0.63 wt%. Tannase ("TANNASE KTFH", product of Kikkoman Corporation) was then added as much as 0.25 Unit per gram of the water-added first tea extract, followed by tannase treatment at 40°C for 60 min (pH 4.8). When the ratio of gallate forms decreased to 25 wt%, heating was conducted at 90°C for 2 min to inactivate the enzyme so that the reaction was terminated. The reaction mixture was allowed to cool. The tannase-treated tea extract was then allowed to pass through a ceramic filter having a membrane pore size of 0.2 µm to lower the turbidity to 3.0 NTU. Using a reverse osmosis membrane, the obtained tea extract was then subjected to concentration processing to a solids concentration of 17 wt%. Spray drying was conducted to obtain a powdery, purified tea extract. The production conditions for the purified tea extract and the results of its evaluations are shown in Table 2.

### Comparative Example 3

A powdery tea extract was obtained by a similar procedure as in Comparative Example 1 except that the tannase treatment was not conducted. The production conditions for the purified tea extract and the results of its evaluations are shown in Table 2.

### Comparative Example 4

Dried tea leaves (50 g) were extracted for 30 min with deionized water (0.75 L) of 90°C, and the extract was subjected to coarse filtration through 80-mesh stainless steel filter and 200-mesh stainless steel filter to obtain a tea extract. The thus-obtained tea extract had a concentration of the non-polymer catechins of 0.94 wt% and a turbidity of 676 NTU. Tannase ("TANNASE KTFH", product of Kikkoman Corporation) was then added as much as 0.25 Unit per gram of the tea extract, followed by tannase treatment at 25°C for 60 min (pH 4.8). Heating was then conducted at 90°C for 2 min to inactivate the enzyme so that the reaction was terminated. The reaction mixture was allowed to cool. The ratio of gallate forms in the thus-obtained purified tea extract was 17 wt%. The production conditions for the purified tea extract and the results of its evaluations are shown in Table 2.

### Comparative Example 5

Dried tea leaves (50 g) were extracted for 30 min with deionized water (0.75 L) of 90°C, and the extract was subjected to centrifugal separation at 6,000 rpm for 10 min. The thus-obtained tea extract had a concentration of the non-polymer catechins of 0.93 wt% and a turbidity of 247 NTU. Tannase ("TANNASE KTFH", product of Kikkoman Corporation) was then added as much as 0.25 Unit per gram of the tea extract, followed by tannase treatment at 25°C for 60 min. The reaction was then terminated at a solution pH of 4.8, and heating was then conducted at 90°C for 2 min to inactivate the enzyme so that the reaction was terminated. The reaction mixture was allowed to cool. The ratio of gallate forms in the thus-obtained purified tea extract was 16 wt%. The production conditions for the purified tea extract and the results of its evaluations are shown in Table 2.

### Example 3

A powdery, purified tea extract was obtained by a similar procedure as in Example 1 except that a PTFE membrane was used instead of the ceramic membrane and the solid-liquid separation of insoluble solids was conducted at 25°C. The production conditions for the purified tea extract and the results of its evaluations are shown in Table 1.

### Example 4

A powdery, purified tea extract was obtained by a similar procedure as in Example 3 except that the solid-liquid separation of insoluble solids was conducted at 20°C. The production conditions for the purified tea extract and the results of its evaluations are shown in Table 1.

### Example 5

A powdery, purified tea extract was obtained by a similar procedure as in Example 3 except that the solid-liquid separation of insoluble solids was conducted at 10°C. The production conditions for the purified tea extract and the results of its evaluations are shown in Table 1.

### Comparative Example 6

The second tea extract obtained in Example 1 was subjected to concentration such that the concentration of the non-polymer catechins was raised to 8.50 wt%. Tannase ("TANNASE KTFH", product of Kikkoman Corporation) was then added as much as 3.17 Units per gram of the concentrated second tea extract, followed by tannase treatment at 40°C for 30 min. By a similar procedure as in Example 1 except for the foregoing, a powdery, purified tea extract was obtained. The production conditions for the purified tea extract and the results of its evaluations are shown in Table 2.

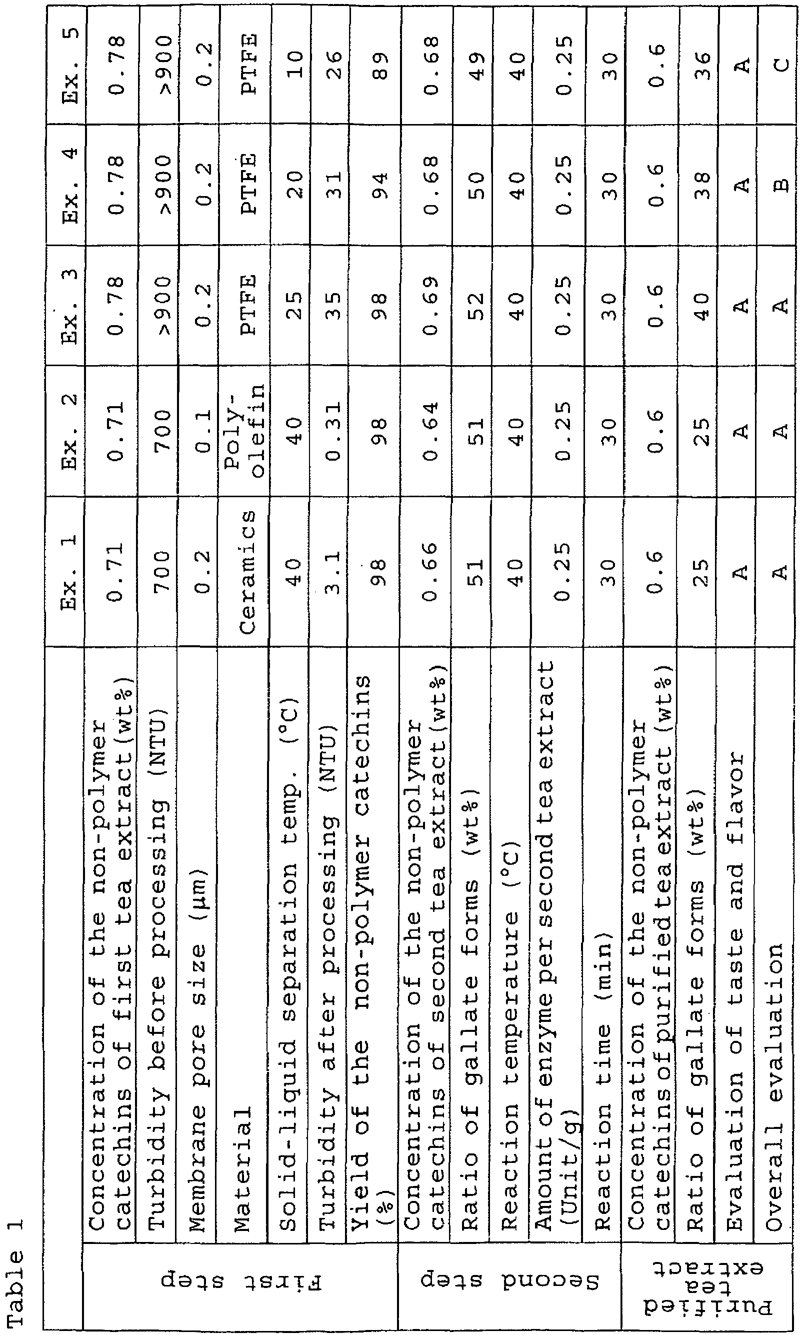

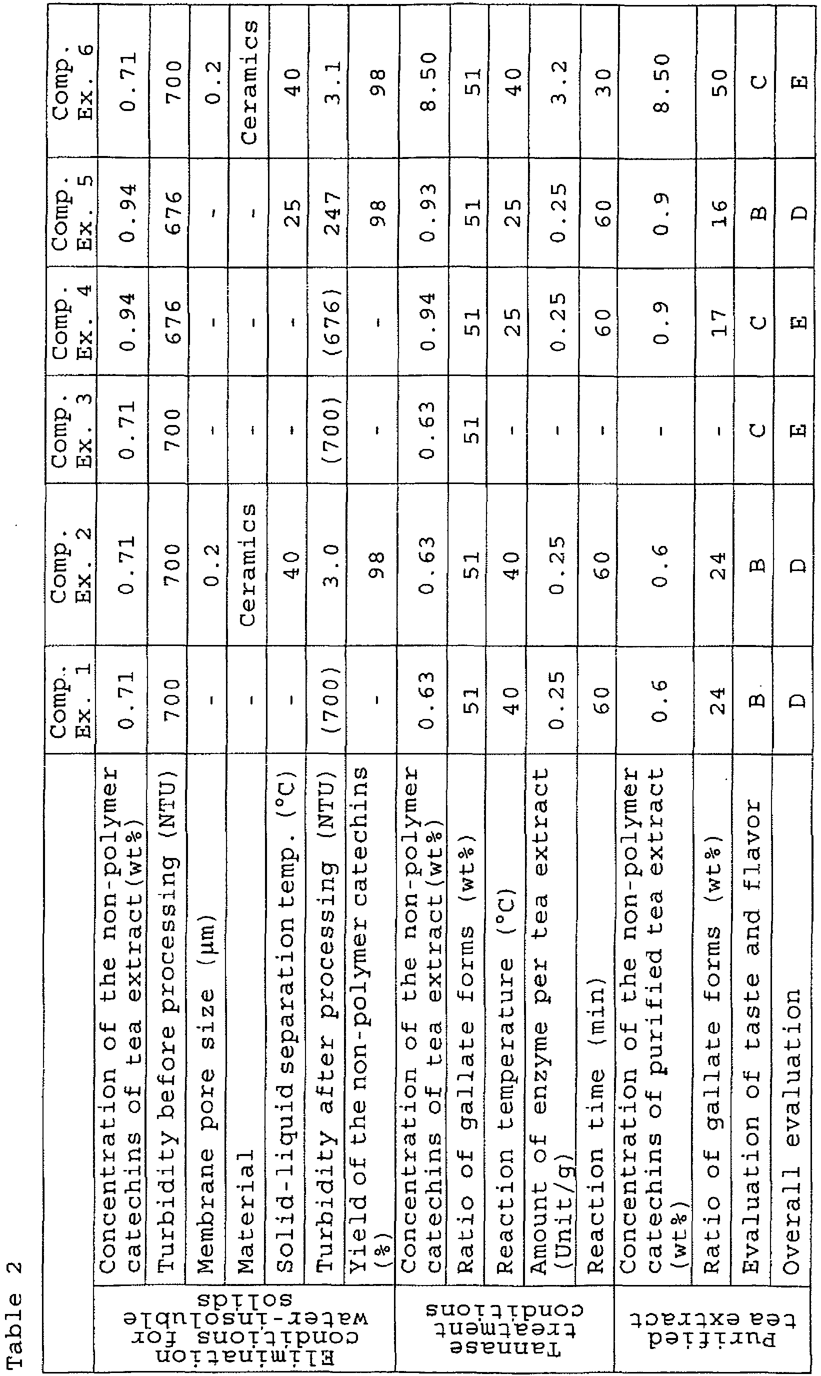

Comparative Example 1 is directed to the tannase treatment of a tea extract without adjustment of its turbidity. Comparing the reaction time, which was required upon controlling the ratio of gallate forms to about 25 wt%, with that in Example 1, the reaction time in Example 1 was confirmed to be reduced to a half of that in Comparative Example 1. Comparative Example 2 is directed to the elimination of water-insoluble solids from a tea extract such that the tea extract has a predetermined turbidity after its tannase treatment, but the results indicated that similar to Comparative Example 1, the accelerating effects for the enzyme reaction were insufficient. These results have made evident the significance of tannase treatment after the elimination of water-insoluble solids from a tea extract to have a predetermined turbidity. It has also been found from the evaluation results of taste and flavor that the worsening of flavor and taste due to a deterioration with time of a tea extract can also be inhibited when the tannase treatment step is completed in a short time.

The yields of the non-polymer catechins after solid-liquid separation in Examples 1-3 were 98% or higher, and therefore, were high. In Example 5, on the other hand, the yield of the non-polymer catechins after solid-liquid separation dropped to 89% despite the adjustment to a predetermined turbidity. Making a comparison between Example 3 and Example 5, they are different only in the temperature at solid-liquid separation. A cause of the reduction in the yield of thenon-polymercatechinsaftersolid-liquidseparation in Example 5 may, therefore, be inferred to be attributable to the occurrence of creaming down as a result that the solid-liquid separation was conducted at the low temperature of 10°C.

Example 4 is directed to the solid-liquid separation of insoluble solids in Example 3 as conducted at the temperature of 20°C. The yield of the non-polymer catechins after solid-liquid separation was 94%. A higher result was, therefore, obtained compared with 89% in Example 5. Concerning the velocity of the tannase-catalyzed reaction, the decreased value of the ratio of gallate forms as its index in Example 4 was substantially equal to that in Example 3. As the temperature for the separation of insoluble solids, a temperature higher than 15°C but not higher than 40°C is, therefore, considered to be preferable.

Comparative 6 is directed to the tannase treatment of Example 1 as conducted under different conditions. Described specifically, Comparative Example 6 was substantially the same as Example 1 in the amount of tannase per the non-polymer catechins, but conducted the reaction at the concentration of the non-polymer catechins of 8.50 wt%. The reaction temperature and reaction time were the same as in Example 1, but the reaction velocity was very slow and the ratio of gallate forms after the reaction was decreased to only as high as 50 wt%. From this result, it is considered ef fective, as a condition for the tannase treatment in the second step, to set the concentration of the non-polymer catechins of from 0.05 to 4.0 wt% in the second tea extract. The obtained tea extract was confirmed to provide a strong sensation of bitterness and astringency.

Further, Comparative Example 4 is directed to the tannase treatment of a tea extract without adjustment of its turbidity of as in Comparative Example 1, and Comparative Example 5 is directed to insufficient elimination of water-insoluble solids. The obtained tea extract was confirmed to provide a strong sensation of bitterness and astringency as in Comparative Example 3 in which the tea extract was nothing but one simply extracted from tea.

From these results, it has been confirmed that, when a tea extract from which water-insoluble solids have been eliminated at such a temperature as causing no creaming down at the time of solid-liquid separation to provide a predetermined turbidity is subjected to tannase treatment, the enzyme reaction can be dramatically accelerated with a smaller amount of the enzyme and the ratio of gallate forms can hence be substantially decreased without lowering the yield of the non-polymer catechins. Further, the purified tea extracts obtained in the examples were confirmed to be pronouncedly suppressed in bitterness and astringency, and as a result of visual observation of their external appearances, to be improved in color.

## Claims

1. A process for producing a purified tea extract, which comprises:
a first step which comprises eliminating water-insoluble solids from a first tea extract and then obtaining a second tea extract so that a turbidity falls into a range from 0.1 to 100 NTU when a concentration of the non-polymer catechins is adjusted to 0.7 wt%, and
a second step which comprises subjecting the second tea extract at a concentration of the non-polymer catechins of from 0.05 to 4.0 wt% to tannase treatment,
wherein the average reaction time of the tannase treatment is from 20 to 90 min.

2. The process according to claim 1, wherein the water-insoluble solids are eliminated at a temperature higher than 15°C.

3. The process according to claim 1 or 2, wherein the water-insoluble solids are eliminated by at least one solid-liquid separation method selected from membrane processing, filtration and centrifugal separation.

4. The process according to claim 3, wherein a membrane for use in the membrane processing has a pore size of from 0.01 to 1 µm.

5. The process according to any one of claims 1 to 4, wherein the tannase treatment is conducted such that a ratio of gallate forms in the non-polymer catechins falls into a range from 0.1 to 50 wt%.

6. The process according to any one of claims 1 to 5, wherein the tannase treatment is conducted at from 5 to 45°C.

7. The process according to any one of claims 1-6, wherein from 0.02 to 0.75 Unit of tannase is added per gram of the second tea extract at a concentration of the non-polymer catechins of from 0.67 wt%.

8. A purified tea extract obtainable by the process according to any one of claims 1 to 7.

## Patentansprüche

1. Verfahren zur Herstellung eines gereinigten Tee-Extrakts, umfassend:
einen ersten Schritt, der das Eliminieren wasserunlöslicher Feststoffe aus einem ersten Tee-Extrakt und dann Erhalten eines zweiten Tee-Extrakts, so dass die Trübung in einen Bereich von 0,1 bis 100 NTU fällt, wenn die Konzentration der nicht-polymeren Catechine auf 0,7 Gew.% eingestellt wird, umfasst, und
einen zweiten Schritt, der die Durchführung einer Tannase-Behandlung mit dem zweiten Tee-Extrakt bei einer Konzentration der nicht-polymeren Catechine von 0,05 bis 4,0 Gew.% umfasst,
worin die mittlere Reaktionszeit der Tannase-Behandlung von 20 bis 90 Minuten ist.

2. Verfahren gemäß Anspruch 1, worin die wasserunlöslichen Feststoffe bei einer Temperatur von höher als 15°C eliminiert werden.

3. Verfahren gemäß Anspruch 1 oder 2, worin die wasserunlöslichen Feststoffe durch mindestens ein Fest-Flüssig-Trennverfahren, ausgewählt aus Membranverfahren, Filtration und Zentrifugationsseparation, eliminiert werden.

4. Verfahren gemäß Anspruch 3, worin die Membran zum Einsatz im Membranverfahren eine Porengröße von 0,01 bis 1 µm aufweist.

5. Verfahren gemäß irgendeinem der Ansprüche 1 bis 4, worin die Tannase-Behandlung so durchgeführt wird, dass der Anteil der Gallatformen in den nicht-polymeren Catechinen in einen Bereich von 0,1 bis 50 Gew.% fällt.

6. Verfahren gemäß irgendeinem der Ansprüche 1 bis 5, worin die Tannase-Behandlung bei 5 bis 45°C durchgeführt wird.

7. Verfahren gemäß irgendeinem der Ansprüche 1 bis 6, worin 0,02 bis 0,75 Einheiten Tannase pro Gramm des zweiten Tee-Extrakts bei einer Konzentration der nicht-polymeren Catechine ab 0,67 Gew.% zugegeben wird.

8. Gereinigtes Tee-Extrakt, erhältlich durch das Verfahren gemäß irgendeinem der Ansprüche 1 bis 7.

## Revendications

1. Procédé pour produire un extrait de thé purifié, qui comprend :
une première étape qui comprend l'élimination de matières solides insolubles dans l'eau d'un premier extrait de thé et ensuite l'obtention d'un deuxième extrait de thé de sorte que la turbidité soit située dans une plage de 0,1 à 100 NTU lorsque la concentration des catéchines non polymères est ajustée à 0,7 % en poids, et
une deuxième étape qui comprend la soumission du deuxième extrait de thé à une concentration des catéchines non polymères de 0,05 à 4,0 % en poids à un traitement par une tannase,
dans lequel le temps de réaction moyen du traitement par une tannase est de 20 à 90 min.

2. Procédé selon la revendication 1, dans lequel les solides insolubles dans l'eau sont éliminés à une température supérieure à 15 °C.

3. Procédé selon la revendication 1 ou 2, dans lequel les solides insolubles dans l'eau sont éliminés par au moins un procédé de séparation solide-liquide choisi parmi un traitement sur membrane, une filtration et une séparation centrifuge.

4. Procédé selon la revendication 3, dans lequel une membrane pour utilisation dans le traitement sur membrane a une taille de pore de 0,01 à 1 µm.

5. Procédé selon l'une quelconque des revendications 1 à 4, dans lequel le traitement par une tannase est conduit de sorte qu'un rapport de formes de gallate dans les catéchines non polymères soit situé dans une plage de 0,1 à 50 % en poids.

6. Procédé selon l'une quelconque des revendications 1 à 5, dans lequel le traitement par une tannase est conduit à de 5 à 45 °C.

7. Procédé selon l'une quelconque des revendications 1 à 6, dans lequel de 0,02 à 0,75 unité de tannase est ajoutée par gramme du deuxième extrait de thé à une concentration des catéchines non polymères de à partir de 0,67 % en poids.

8. Extrait de thé purifié pouvant être obtenu par le procédé selon l'une quelconque des revendications 1 à 7.
